# EUROPÄISCHE PATENTSCHRIFT

(11) **EP 3 473 898 B1**
(45) Veröffentlichungstag und Bekanntmachung des Hinweises auf die Patenterteilung: **22.03.2023**
(21) Anmeldenummer: 18197859.4
(22) Anmeldetag: 01.10.2018
(51) Int. Cl.: F16J 15/34

(54) **GLEITRINGDICHTUNG ZUR ABDICHTUNG EINES EIN FLUID FÜHRENDEN KANALS UND/ODER RAUMES**
SLIDING SEAL RING FOR SEALING A FLUID-CONDUCTING CHANNEL AND/OR AREA
GARNITURE MÉCANIQUE D'ÉTANCHÉITÉ DESTINÉE À ÉTANCHÉIFIER UN CANAL ET / OU UN ESPACE GUIDANT UN FLUIDE

(30) Priorität: 19.10.2017 DE 102017218689
(43) Veröffentlichungstag der Anmeldung: 24.04.2019
(73) Patentinhaber: Christian Maier GmbH & Co. KG, 89520 Heidenheim (DE)
(72) Erfinder: Schwenk, Günther, 89520 Heidenheim (DE)
(74) Vertreter: Dr. Weitzel & Partner

(56) Entgegenhaltungen:
- EP-A1- 3 376 079
- CN-A- 103 791 095
- DE-A1-102013 220 429
- US-A1- 2009 290 971
- US-A1- 2017 045 144

## Beschreibung

Die vorliegende Erfindung betrifft eine Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung, gemäß dem Oberbegriff von Anspruch 1.

Eine gattungsgemäße Gleitringdichtung ist aus DE 34 26 539 A1 bekannt. Die Gleitringdichtung weist einen um eine Drehachse umlaufenden Gleitring auf, der sich in Axialrichtung, das heißt in Richtung der Drehachse, mit seiner Stirnseite an einem Gegenring abstützt. Die Stirnseite bildet demnach die Dichtfläche aus.

Der Gleitring unterliegt aufgrund seiner Relativdrehung und der elastischen Abstützung gegen den Gegenring einem Verschleiß. Aufgrund des Verschleißes bewegt sich der Gleitring zunehmend in der Axialrichtung. Um einen rechtzeitigen Austausch des Gleitringes sicherstellen zu können, bevor der Gleitring zu stark abgenutzt ist und damit seine Dichtwirkung verliert, wird der Verschleiß dadurch erfasst, dass radial zum axial beweglichen Gleitring eine Sonde vorgesehen ist, welche erfasst, wie weit sich der Gleitring bereits relativ zur Sonde axial bewegt hat. Hierfür kann ein magnetischer Einsatz im Gleitring oder in einem sich mit dem Gleitring bewegenden Bauteil vorgesehen sein und die Sonde als elektromagnetischer Messfühler ausgebildet sein, welcher ein Signal des magnetischen Einsatzes erfasst, wobei das Signal ein Maximum erreicht, wenn die Abriebflächen den maximalen Abrieb erreicht haben.

Bei der dargestellten Gleitringdichtung ist die Sonde entfernt von dem umlaufenden Gleitring in einem stationären Gehäuse positioniert und wird beispielsweise radial von außen in eine Radialbohrung in dem Gehäuse eingeschraubt. Das Gehäuse trägt einen austauschbaren Sitz, der einen stationären Gegenring für den Gleitring der Gleitringdichtung ausbildet. Der Gleitring selbst ist axial beweglich und verdrehbar auf einer Welle positioniert und wird in der Axialrichtung zwischen dem Sitz und einer die Welle umschließenden sekundären Abdichtung eingeschlossen, wobei die sekundäre Abdichtung durch einen Druckbalg hergestellt wird, der zugleich den Gleitring in der Axialrichtung gegen den Gegenring drückt.

Da der Gleitring gegenüber dem Gegenring und somit dem Gehäuse umläuft, muss sichergestellt werden, dass das Signal des magnetischen Einsatzes bei jeder möglichen Drehzahl von der Sonde sicher erfasst werden kann.

Ein weiterer, noch gravierenderer Nachteil bei der dargestellten Ausführungsform ist, dass im Fall einer Undichtigkeit zwischen der stirnseitigen Dichtfläche des Gleitringes und dem Gegenring, beispielsweise durch eine Unebenheit oder einen nachträglich eingebrachten Schaden in der Dichtfläche des Gleitringes, eine vollständige Demontage der gesamten Gleitringdichtung notwendig ist, um die Stirnseite plan bearbeiten zu können. Anschließend ist eine erneute Ausrichtung der verschiedenen Elemente der Gleitringdichtung bei der erneuen Montage erforderlich.

US 2017/045144 A1 offenbart eine trockene Gasdichtung, die in Gaskompressoren in der Öl- und Gasindustrie verwendet wird. Diese Dichtung wird derart betrieben, dass sich ein dynamischer Gasfilm zwischen der umlaufenden und der stationären Dichtfläche einstellt. Hierfür muss ein Spalt zwischen den beiden Dichtflächen aufrechterhalten werden.

EP 3 376 079 A1 offenbart ebenfalls eine trockene Gasdichtung, bei der ein Spalt zwischen den Dichtflächen eingestellt werden muss. Eine weitere Gasdichtung, bei der sich die Dichtflächen nicht berühren, wird in US 2009/290971 A1 offenbart.

Der vorliegenden Erfindung liegt die Aufgabe zugrunde, eine Gleitringdichtung zur Abdichtung eines Kanals und/oder Raumes, der sich in einem stationären und/oder in einem rotierenden Bauteil erstreckt und ein Fluid, wie Flüssigkeit oder Gas führt, anzugeben, bei welcher eine Bearbeitung oder Nachbearbeitung der Dichtfläche des Gleitringes einfacher möglich ist. Die Gleitringdichtung soll sich bevorzugt darüber hinaus durch eine sicherere Verschleißerfassung ungeachtet der Drehzahl des rotierenden Bauteils auszeichnen.

Eine erfindungsgemäße Gleitringdichtung zur Abdichtung wenigstens eines sich in einem stationären Bauteil und/oder einem rotierenden Bauteil erstreckenden, ein Fluid führenden Kanals und/oder Raumes gegenüber der Umgebung weist einen Gleitring auf, der sich in Axialrichtung gegen einen Gegenring dichtend abstützt. Bei einer Ausführungsform der Erfindung erstreckt sich der wenigstens eine das Fluid führende Kanal aus einem stationären Bauteil in ein rotierendes Bauteil oder aus einem rotierenden Bauteil in das stationäre Bauteil, demnach durch eine Drehdurchführung. Die Drehdurchführung dient der Übergabe des Fluids aus dem jeweiligen Kanalabschnitt des stationären Bauteils in den jeweiligen Kanalabschnitt des rotierenden, das heißt um eine Drehachse umlaufenden Bauteils oder umgekehrt. Die Erfindung kann jedoch auch unabhängig von einer Drehdurchführung in jeglichem Bauteil angewendet werden, bei dem eine Abdichtung durch eine Gleitringdichtung Verwendung findet. Insofern ist der das Fluid führende Kanal ein beliebiger Raum in einem stationären Bauteil und/oder in einem rotierenden Bauteil, der durch die Gleitringdichtung gegenüber einer Umgebung abgedichtet wird. Bei der Umgebung kann es sich um einen anderen Raum in dem Bauteil und/oder einem anderen Bauteil handeln, oder um eine Umgebung, die nicht mehr durch Gehäuseteile eingeschlossen wird. Die Umgebung kann drucklos oder druckbeaufschlagt sein. Das Fluid kann in dem Kanal und/oder Raum strömen oder stationär sein. Nur beispielhaft wird auf die Abdichtung wenigstens eines ein Fluid führenden Kanals und/oder Raumes in einer Pumpe, wie Flüssigkeitspumpe oder Gaspumpe, einem Kompressor und anderen Arbeitsmaschinen verwiesen.

Dadurch, dass der Gleitring sich in der Axialrichtung, das heißt in Richtung der Drehachse des umlaufenden Bauteils, gegen den Gegenring dichtend abstützt, unterliegt er einem Verschleiß. Beispielsweise ist der Gleitring aus einem Kohlenstoff hergestellt beziehungsweise umfasst solchen Kohlenstoff. Um zu vermeiden, dass durch den Verschleiß, der den Gleitring in der Axialrichtung kürzt, eine Undichtigkeit beispielsweise in der Drehdurchführung entsteht, ist der Gleitring in der Axialrichtung beweglich und zur Kompensation des Verschleißes mit seiner stirnseitigen Dichtfläche elastisch gegen den Gegenring abgestützt. Ein fortschreitender Verschleiß wird somit durch zunehmende axiale Verlagerung des Gleitringes in Richtung des Gegenringes kompensiert. Zusätzlich oder alternativ kann auch der Gegenring im Bereich einer an der Dichtfläche des Gleitringes anliegenden Gegenfläche einem Abrieb beziehungsweise Verschleiß unterliegen, sodass zu dessen Kompensation eine axiale Verlagerung des Gleitringes durch dessen elastische Vorspannung erfolgt.

Um das Ausmaß des Verschleißes beziehungsweise der bereits erfolgten axialen Bewegung des Gleitringes bewerten zu können, ist ein Positionssensor zur Erfassung der Position des Gleitringes in der Axialrichtung vorgesehen.

Erfindungsgemäß weist der Positionssensor wenigstens einen am Gleitring befestigten oder in Axialrichtung gegen den Gleitring abgestützten und sich in der Axialrichtung mit dem Gleitring bewegenden Geber auf, sowie einen radial außerhalb des Gleitringes positionierten stationären Sensor, der die Position des Gebers in der Axialrichtung erfasst.

Der wenigstens eine Geber, insbesondere in Form eines Magneten, kann beispielsweise in eine Bohrung, insbesondere Radialbohrung, des Gleitringes eingebracht sein.

Erfindungsgemäß ist der stationäre Sensor an einem den Gleitring in der Axialrichtung beweglich aufnehmenden Gehäuse angeschlossen und/oder wird von diesem getragen. Der Gleitring steht in der Axialrichtung mit seiner stirnseitigen Dichtfläche gegenüber diesem Gehäuse über, das heißt die stirnseitige Dichtfläche des Gleitringes ist in der Axialrichtung außerhalb des Gehäuses und mit Abstand zu dem Gehäuse positioniert, sodass eine Bearbeitung, insbesondere Planbearbeitung der stirnseitigen Dichtfläche bei im Gehäuse montierten Gleitring möglich ist.

Insbesondere kann ein Läppen der Dichtfläche erfolgen. Bei einem solchen Läppen kann der Gleitring mit seiner Dichtfläche auf die Läppmaschine aufgelegt werden, um die Dichtfläche besonders eben zu bearbeiten. Der Gleitring kann dabei im Gehäuse montiert sein.

Gemäß einer Ausführungsform der Erfindung ist der stationäre Sensor lösbar am Gehäuse angeschlossen, beispielsweise mittels einer Rastverbindung. In diesem Fall kann der stationäre Sensor bei Bedarf vor der Planbearbeitung der Dichtfläche von dem Gehäuse abgenommen werden.

Bei einer Ausführungsform der Erfindung steht der Gleitring in der Axialrichtung mit seiner stirnseitigen Dichtfläche auch gegenüber dem stationären Sensor über. In diesem Fall ist die Bearbeitung der Dichtfläche, beispielsweise durch Läppen, auch dann möglich, wenn der stationäre Sensor unlösbar am Gehäuse angeschlossen ist.

Gemäß einer Ausführungsform der Erfindung ist der Gleitring stationär und der Gegenring läuft relativ zum Gleitring um. Stationär bedeutet dabei, dass sich der Gleitring nur in der Axialrichtung bewegen kann, nicht hingegen in Umfangsrichtung, oder zumindest nicht in der Umfangsrichtung angetrieben wird. In diesem Fall ist eine besonders sichere Signalkopplung zwischen dem Geber und dem stationären Sensor gewährleistet, unabhängig von der Drehzahl des rotierenden Bauteils.

Der Geber kann beispielsweise wenigstens einen Magneten umfassen oder durch wenigstens einen Magneten gebildet werden, und der stationäre Sensor als Hall-Sensor ausgeführt sein, der die Position des wenigstens einen Magneten in der Axialrichtung erfasst. Ein solcher Hall-Sensor wird insbesondere von einem elektrischen Strom durchflossen und erzeugt eine Ausgangsspannung, die proportional zum Produkt aus dem Strom und einer magnetischen Flussdichte ist, die durch den dem Gleitring zugeordneten Magneten erzeugt wird.

Besonders vorteilhaft ist der Gleitring zu seiner Abstützung gegen den Gegenring elastisch gegen das Gehäuse abgestützt. Beispielsweise umschließt das Gehäuse den Gleitring in der Umfangsrichtung und weist einen Gehäuseboden auf, der einer der Dichtfläche abgewandten Stirnseite des Gleitringes gegenübersteht. Der Gleitring kann dann mittels eines Federelementes, beispielsweise mittels einer Wellfeder oder einer anderen Druckfeder, die zwischen der Stirnseite und dem Gehäuseboden positioniert ist, elastisch am Gehäuseboden abgestützt sein.

Beispielsweise umfasst der Gleitring einen hohlzylinderförmigen Kohlering oder ist aus einem solchen gebildet, der eine die Dichtfläche ausbildende Stirnseite aufweist. Bevorzugt weist der Kohlering ferner die genannte dem Gehäuseboden zugewandte Stirnseite auf. Der Kohlering steht dann aus dem Gehäuse in der Axialrichtung heraus.

Gemäß einer besonders vorteilhaften Ausführungsform der Erfindung umschließt das Gehäuse den Gleitring in Umfangsrichtung und weist einen radial nach innen gerichteten Vorsprung auf. Der Gleitring weist eine dem radial nach innen gerichteten Vorsprung in der Axialrichtung gegenüberstehende Anschlagfläche auf, mit welcher der Gleitring bei einer maximal zulässigen Bewegung in der Axialrichtung an dem Vorsprung anschlägt. Dadurch wird verhindert, dass der Gleitring vollständig aus dem Gehäuse herausgedrückt wird. Bevorzugt stützt sich der Geber, insbesondere der wenigstens eine Magnet, oder ein den Geber, insbesondere dem wenigstens einen Magneten tragendes Zwischenbauteil, an dieser Anschlagfläche ab beziehungsweise liegt zur Ausrichtung des Magneten beziehungsweise des Bauteils an dieser Anschlagfläche an.

Das Gehäuse kann eine Öffnung in Radialrichtung aufweisen, durch welche das Zwischenbauteil oder der Geber, insbesondere der wenigstens eine Magnet des Gebers, radial nach außen aus dem Gehäuse herausragt.

Der Gleitring kann mittels eines Dichtelementes, beispielsweise eines O-Ringes, gegen das Gehäuse abgedichtet sein, insbesondere in der Radialrichtung.

Das Gehäuse kann beispielsweise aus Stahl beziehungsweise Stahlblech hergestellt sein.

Der Positionssensor ist insbesondere derart ausgeführt, dass er nicht nur die Endpositionen eines noch gar nicht verschlissenen Gleitringes und eines vollständig verschlissenen Gleitringes erfasst, sondern auch zwischen diesen Endpositionen vorhandene Zwischenpositionen. Insbesondere wird eine kontinuierliche Bewegung des Gleitringes in der Axialrichtung in jeder Position erfasst.

Bei einer Ausführung des Gleitringes mit einer in Axialrichtung weisenden Anschlagfläche, die ein vollständiges Herausschieben des Gleitringes aus dem Gehäuse verhindert, steht die Stirnseite mit der Dichtfläche in der Axialrichtung gegenüber der Anschlagfläche hervor. Die Anschlagfläche kann bevorzugt radial außerhalb oder radial innerhalb der Dichtfläche vorgesehen sein.

Das Zwischenbauteil kann beispielsweise in Form eines sich an der Anschlagfläche abstützenden Schlittens vorgesehen sein, der elastisch gegen die Anschlagfläche gedrückt wird und insbesondere in einer Gleitschiene am Gehäuse gehalten wird.

Obwohl bei den vorstehenden und folgenden Ausführungsbeispielen der Erfindung der sich in Axialrichtung zur Kompensation seines Verschleißes bewegende Ring als Gleitring bezeichnet wurde und der vergleichsweise härtere Ring, der insbesondere nicht oder weniger verschleißt, als Gegenring bezeichnet wurde, umfasst die vorliegende Erfindung auch Ausführungsformen, bei welchen nicht oder nicht nur der sich in der Axialrichtung bewegende Ring stirnseitig verschleißt, sondern auch solche Ausführungsformen, bei welchen ein in der Axialrichtung stationärer Ring gleich weich oder weicher als der in der Axialrichtung bewegliche Ring ausgeführt ist und somit zusätzlich zu dem in der Axialrichtung beweglichen Ring oder anstelle des in der Axialrichtung beweglichen Ringes an seiner Stirnseite verschleißt.

Die Erfindung soll nachfolgend anhand eines Ausführungsbeispiels und den Figuren exemplarisch beschrieben werden.

Es zeigen:
- Figur 1: eine dreidimensionale Draufsicht auf eine erfindungsgemäß ausgeführte Gleitringdichtung;
- Figur 2: einen Axialschnitt durch die Gleitringdichtung aus der Figur 1;
- Figur 3: eine Vergrößerung des Bereiches mit dem Positionssensor;
- Figur 4: eine Darstellung analog der Figur 3 jedoch mit unmittelbar im Gleitring montierten Magneten;
- Figur 5: eine schematische Darstellung eines lösbaren Anschlusses des Sensors am Gehäuse mittels einer Rastverbindung.

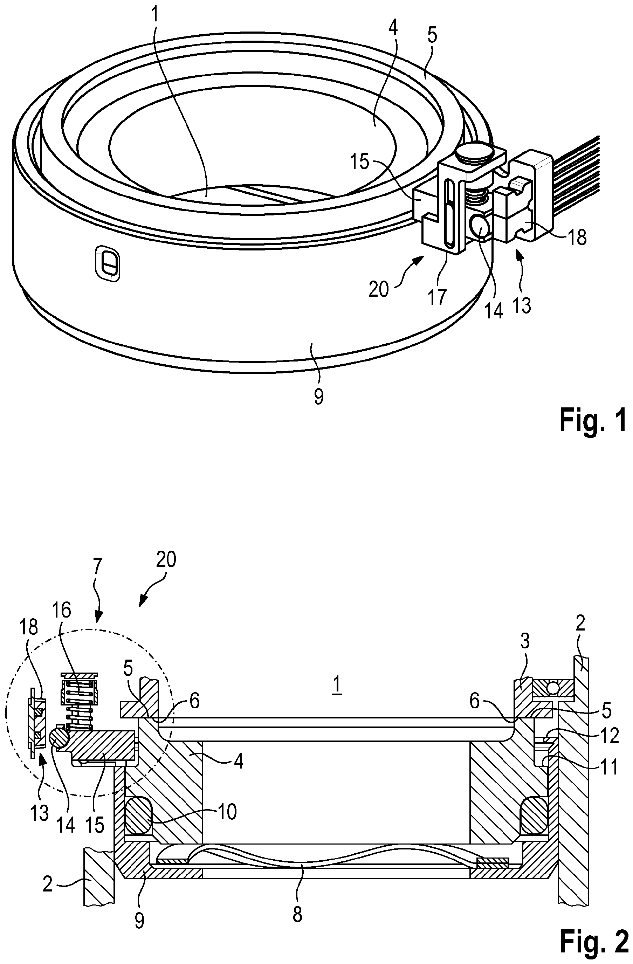

In der Figur 1 ist ein Ausführungsbeispiel einer erfindungsgemäßen Gleitringdichtung zur Abdichtung einer Drehdurchführung gezeigt, mit einem Kanal 1, der ein Fluid aus einem stationären Bauteil in ein rotierendes Bauteil führt. Das stationäre Bauteil ist beispielsweise in der Figur 2 schematisch angedeutet und mit 2 beziffert und das rotierende Bauteil ist ebenfalls in der Figur 2 schematisch angedeutet und mit 3 beziffert.

Wie aus den Figuren 1 bis 5 ersichtlich ist, weist die Gleitringdichtung einen Gleitring 4 auf, der an einer axialen Stirnseite eine Dichtfläche 5 aufweist, wobei sich die Dichtfläche 5 an einer Gegenfläche 6 des rotierenden Bauteils 3 abstützt, um den Kanal 1 gegenüber der Umgebung beziehungsweise einer Leckageseite 7 abzudichten.

Der Gleitring 4 ist im Bereich seiner Dichtfläche 5 und/oder das rotierende Bauteil 3 ist im Bereich der Gegenfläche 6 aus einem verschleißenden Werkstoff hergestellt, wobei der Verschleiß durch Abrieb des Werkstoffes bei der Relativdrehung zwischen dem Gleitring 4 beziehungsweise der Dichtfläche 5 und der Gegenfläche 6 erfolgt. Um trotzdem die gewünschte Abdichtung im Bereich der Dichtfläche 5 beziehungsweise Gegenfläche 6 zu erzielen, ist der Gleitring 4 an seinem der Dichtfläche 5 abgewandten axialen Ende mittels eines Federelementes, hier einer Druckfeder oder Wellfeder 8, elastisch in einem Gehäuse 9 abgestützt. Wie man aus den Figuren 2, 4 und 5 entnehmen kann, erfolgt die Abstützung mittels der Druckfeder oder Wellfeder beispielsweise an einem Gehäuseboden 22 des Gehäuses 9.

Der Kanal 1 verläuft in Axialrichtung durch das Gehäuse 9 und den Gleitring 4 und bevorzugt auch durch die Wellfeder 8. Zur Abdichtung ist ein O-Ring 10 zwischen dem Gleitring 4 und dem Gehäuse 9 vorgesehen.

Der Gleitring 4 weist eine Schulter oder Anschlagfläche 11 auf, die bei einer ausfahrenden Bewegung des Gleitringes 4 in Axialrichtung aus dem Gehäuse 9 an einem radial nach innen gerichteten Vorsprung 12 des Gehäuses 9 anschlägt, um ein weiteres Ausfahren des Gleitringes 4 aus dem Gehäuse 9 zu verhindern.

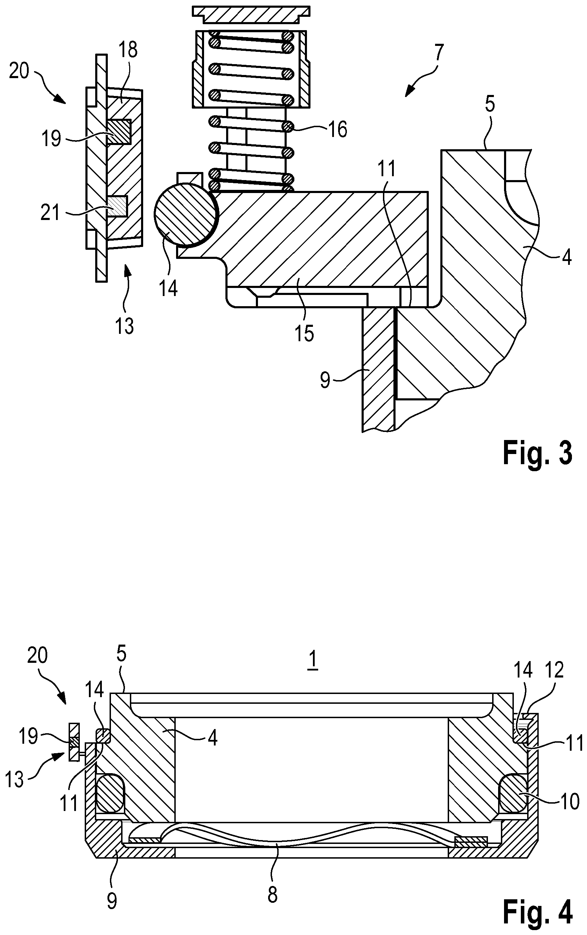

Am Gehäuse 9 ist ein stationärer Sensor 13 angeschlossen, der radial außerhalb zu einem Magneten 14 positioniert ist und als Hall-Sensor ausgeführt ist, der eine axiale Position des Magneten 14 und damit des Gleitringes 4 erfasst. Der Magnet 14 ist insbesondere unmittelbar am Gleitring 4 angeschlossen, siehe die Figur 4, oder über ein Zwischenbauteil 15, das sich in der Axialrichtung gemeinsam mit dem Gleitring 4 bewegt und den Magneten 14 trägt, siehe die Figuren 1 bis 3.

Bevorzugt stützt sich der Magnet 14 oder das Zwischenbauteil 15 in Axialrichtung an der Anschlagfläche 11 ab.

Im in den Figuren 1 bis 3 gezeigten Ausführungsbeispiel ist das Zwischenbauteil 15 mittels eines Federelementes 16 elastisch gegen die Anschlagfläche 11 abgestützt. Alternativ käme auch ein starrer Anschluss des Zwischenbauteils 15 am Gleitring 4 in Betracht.

Im in der Figur 4 gezeigten Ausführungsbeispiel ist ein sich in Umfangsrichtung über den ganzen Umfang des Gleitringes 4 erstreckender Magnet 14 vorgesehen oder es sind mehrere Magneten 14 über dem Umfang des Gleitringes 4 verteilt angeordnet, um eine Verdrehung des Gleitringes 4 relative zum stationären Sensor 13 zu ermöglichen, ohne die Funktionsweise der Positionserfassung zu beeinträchtigen. Dies ist jedoch nicht zwingend.

Der stationäre Sensor 13 weist ein Sensorgehäuse 18 auf, in welches ein Temperatursensor 19 integriert ist. Der Temperatursensor 19 erfasst die Temperatur eines aus dem Kanal 1 über die Dichtfläche 5 übertretenden Leckagestroms des im Kanal 1 geführten Fluids, wobei die erfasste Temperatur abhängig von der Größe des Leckagestromes ist, weil durch die Anordnung des Temperatursensors 19 beziehungsweise des stationären Sensors 13 im Leckagestrom mit zunehmendem Leckagestrom der Wärmeübergang zwischen dem Leckagestrom und dem stationären Sensor 13 beziehungsweise Temperatursensor 19 vergrößert wird.

Der stationäre Sensor 19 bildet ferner zusammen mit dem Magneten 14 einen Positionssensor 20 zur Erfassung der Position des Gleitringes 4 in der Axialrichtung.

Der Positionssensor 20 ist als Hall-Sensor ausgeführt und der Temperatursensor 19 wird ferner verwendet, um die Temperaturabhängigkeit der vom Hall-Sensor erfassten Messgröße zu kompensieren. Hierfür kann im Sensorgehäuse 18 oder außerhalb von diesem eine Steuervorrichtung 21 vorgesehen sein, die die Positionserfassung und insbesondere die Leckagestromerfassung steuert.

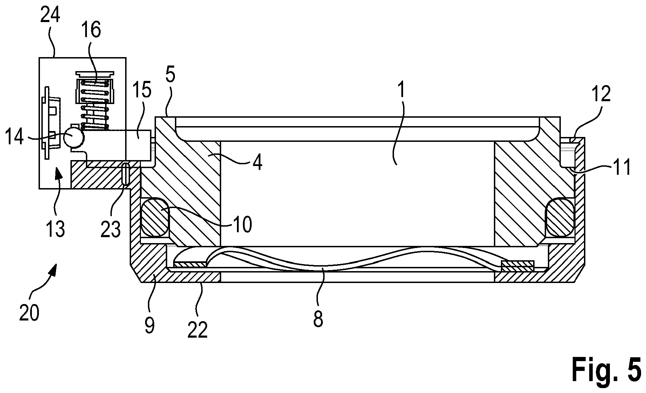

Um die Dichtfläche 5 planbearbeiten zu können, ist der stationäre Sensor 13 bevorzugt lösbar am Gehäuse 9 angeschlossen, beispielsweise mittels einer Rastverbindung. Bei den Darstellungen in den Figuren 1 bis 3 ist die Rastverbindung nicht im Einzelnen gezeigt. In der Figur 5 ist die Rastverbindung mit 23 beziffert. Diese Rastverbindung 23 umfasst wenigstens eine Rastöffnung im Gehäuse 9 und wenigstens eine Rastnase in einem zumindest den stationären Sensor tragenden Träger. Zusätzlich oder alternativ können die wenigstens eine Rastöffnung auch in dem Träger und die wenigstens eine Rastnase in dem Gehäuse vorgesehen sein. Wenn, wie in der Figur 5 gezeigt ist, auch weitere dem Positionssensor 20 zugeordnete Bauteile in der Axialrichtung über die Dichtfläche 5 des Gleitrings 4 hinausstehende Bauteile vorgesehen sind, so werden diese ebenfalls im Träger 24 gelagert, beispielsweise, wenn dieses vorgesehen ist, das Federelement 16 und/oder das Zwischenbauteil 15. Alle in der Axialrichtung über die Dichtfläche 5 herausstehenden Bauteile können gemeinsam mit dem Träger 24 vom Gehäuse 9 abgenommen werden, um die gewünschte Bearbeitung der Dichtfläche 5 zu ermöglichen. Prinzipiell könnten auch mehrere abnehmbare Träger für die verschiedenen Bauteile vorgesehen sein, und/oder ein oder mehrere Bauteile könnten direkt abnehmbar am Gehäuse angeschlossen sein.

Alternativ sind alle dem Positionssensor 20 zugeordneten Bauteile in der Axialrichtung 4 hinter der Dichtfläche 5 angeordnet, sodass die Dichtfläche 5 in der Axialrichtung über das Gehäuse 9 und den Positionssensor 20 vorsteht. Dies ist beispielsweise in der Figur 4 gezeigt. In diesem Fall ist es nicht notwendig, den Positionssensor 20 beziehungsweise Bauteile desselben, wie den stationären Sensor 13, lösbar am Gehäuse 9 anzuschließen, weil die Bearbeitung der Dichtfläche 5, auch durch Läppen, nicht behindert wird.

Bei einem nicht näher gezeigten lösbaren Anschluss gemäß der Figur 1 ist es möglich, den stationären Sensor 13, insbesondere zusammen mit dem Zwischenbauteil 15 und der das Zwischenbauteil 15 verschiebbar haltenden Gleitschiene 17 vom Gehäuse 9 abzunehmen. Anschließend kann die Dichtfläche 5 beispielsweise geläppt werden.

Bei einer Ausführungsform mit Zwischenbauteil 15 weist das Gehäuse 9 vorteilhaft eine Öffnung in Radialrichtung, beispielsweise in Form einer Ausklinkung, auf, durch welche das Zwischenbauteil 15 radial von außen eingreift, um sich an der Anschlagfläche 11 abzustützen oder um das Zwischenbauteil 15 leichter am Gleitring 4 insbesondere starr befestigen zu können.

### Bezugszeichenliste

- 1: Kanal
- 2: stationäres Bauteil
- 3: rotierendes Bauteil
- 4: Gleitring
- 5: Dichtfläche
- 6: Gegenfläche
- 7: Leckageseite
- 8: Wellfeder
- 9: Gehäuse
- 10: O-Ring
- 11: Anschlagfläche
- 12: Vorsprung
- 13: stationärer Sensor
- 14: Magnet
- 15: Zwischenbauteil
- 16: Federelement
- 17: Gleitschiene
- 18: Sensorgehäuse
- 19: Temperatursensor
- 20: Positionssensor
- 21: Steuervorrichtung
- 22: Gehäuseboden
- 23: Rastverbindung
- 24: Träger

## Patentansprüche

1. Gleitringdichtung zur Abdichtung wenigstens eines sich in einem stationären Bauteil (2) und/oder einem rotierenden Bauteil (3) erstreckenden, ein Fluid führenden Kanals (1) und/oder Raumes gegenüber der Umgebung,
mit einem Gleitring (4) und einem Gegenring, wobei sich der Gleitring (4) in Axialrichtung gegen den Gegenring dichtend abstützt und zur Kompensation eines Verschleißes an seiner stirnseitigen Dichtfläche (5) oder an einer Gegenfläche elastisch und in der Axialrichtung beweglich mit dieser Dichtfläche (5) gegen den Gegenring abgestützt ist;
mit einem Positionssensor (20) zur Erfassung der Position des Gleitringes (4) in der Axialrichtung; wobei
der Positionssensor (20) wenigstens einen am Gleitring (4) befestigten oder in der Axialrichtung gegen den Gleitring (4) abgestützten, sich in der Axialrichtung mit dem Gleitring (4) bewegenden Geber und einen radial außerhalb des Gleitringes (4) positionierten stationären Sensor (13), der die Position des Gebers in der Axialrichtung erfasst, umfasst;
**dadurch gekennzeichnet, dass**
der stationäre Sensor (13) an einem den Gleitring (4) in der Axialrichtung beweglich aufnehmenden Gehäuse (9) angeschlossen ist und/oder von diesem getragen wird, gegenüber welchem der Gleitring (4) in der Axialrichtung mit seiner stirnseitigen Dichtfläche (5) übersteht.

2. Gleitringdichtung gemäß Anspruch 1, **dadurch gekennzeichnet, dass** der stationäre Sensor (13) lösbar am Gehäuse (9) angeschlossen ist.

3. Gleitringdichtung gemäß Anspruch 2, **dadurch gekennzeichnet, dass** der stationäre Sensor (13) mittels einer Rastverbindung (23) am Gehäuse (9) angeschlossen ist.

4. Gleitringdichtung gemäß einem der Ansprüche 1 bis 3, **dadurch gekennzeichnet, dass** der Gleitring (4) in der Axialrichtung mit seiner stirnseitigen Dichtfläche (5) gegenüber dem stationären Sensor (13) übersteht.

5. Gleitringdichtung gemäß einem der Ansprüche 1 bis 4, **dadurch gekennzeichnet, dass** der Gleitring (4) stationär ist und der Gegenring relativ zum Gleitring (4) umläuft.

6. Gleitringdichtung gemäß einem der Ansprüche 1 bis 5, **dadurch gekennzeichnet, dass** der Geber wenigstens einen Magneten (14) umfasst oder durch diesen gebildet wird und der stationäre Sensor (13) als Hall-Sensor ausgeführt ist, der die Position des Magneten (14) in der Axialrichtung erfasst.

7. Gleitringdichtung gemäß einem der Ansprüche 1 bis 6, **dadurch gekennzeichnet, dass** der Gleitring (4) zu seiner Abstützung gegen den Gegenring elastisch gegen das Gehäuse (9) abgestützt ist.

8. Gleitringdichtung gemäß Anspruch 7, **dadurch gekennzeichnet, dass** das Gehäuse (9) den Gleitring (4) in Umfangsrichtung umschließt und einen Gehäuseboden (22) aufweist, der einer der Dichtfläche (5) abgewandten Stirnseite des Gleitringes (4) gegenübersteht, und der Gleitring (4) mittels eines Federelementes, insbesondere mittels einer Wellfeder (8), zwischen der Stirnseite und dem Gehäuseboden (22) elastisch am Gehäuseboden (22) abgestützt ist.

9. Gleitringdichtung gemäß einem der Ansprüche 1 bis 8, **dadurch gekennzeichnet, dass** der Gleitring (4) einen hohlzylinderförmigen Kohlering umfasst oder aus einem solchen gebildet ist, der eine die Dichtfläche (5) ausbildende Stirnseite aufweist, und insbesondere ferner die dem Gehäuseboden (22) zugewandte Stirnseite aufweist.

10. Gleitringdichtung gemäß einem der Ansprüche 1 bis 9, **dadurch gekennzeichnet, dass** das Gehäuse (9) den Gleitring (4) in Umfangsrichtung umschließt und einen radial nach innen gerichteten Vorsprung (12) aufweist, und der Gleitring (4) eine dem radial nach innen gerichteten Vorsprung (12) in der Axialrichtung gegenüberstehende Anschlagfläche (11) aufweist, mit welcher der Gleitring (4) bei einer maximal zulässigen Bewegung in der Axialrichtung an dem Vorsprung (12) anschlägt, wobei der Geber, insbesondere der Magnet (14) oder ein den Geber, insbesondere den Magneten (14) tragendes Zwischenbauteil (15) sich ebenfalls an der Anschlagfläche (11) abstützt oder an dieser anliegt.

11. Gleitringdichtung gemäß Anspruch 10, **dadurch gekennzeichnet, dass** das Gehäuse (9) eine Öffnung in Radialrichtung aufweist, durch welche das Zwischenbauteil (15) oder der Geber, insbesondere der Magnet (14), radial nach außen aus dem Gehäuse (9) herausragt.

## Claims

1. Mechanical seal for sealing at least one fluid-conducting channel (1) and/or space extending in a stationary component (2) and/or a rotating component (3) with respect to the environment,
having a sliding ring (4) and a mating ring, wherein the sliding ring (4) is supported in a sealing manner in the axial direction against the mating ring and, in order to compensate for wear on its end sealing surface (5) or on a mating surface, is supported elastically and movably in the axial direction with this sealing surface (5) against the mating ring;
having a position sensor (20) for detecting the position of the sliding ring (4) in the axial direction; wherein
the position sensor (20) comprises at least one transducer fixed to the sliding ring (4) or supported against the sliding ring (4) in the axial direction and moving in the axial direction with the sliding ring (4), and a stationary sensor (13) positioned radially outside the sliding ring (4) and detecting the position of the transducer in the axial direction;
**characterized in that**
the stationary sensor (13) is connected to and/or supported by a housing (9) which movably receives the sliding ring (4) in the axial direction and with respect to which the sliding ring (4) protrudes in the axial direction with its end sealing surface (5).

2. Mechanical seal according to claim 1, **characterized in that** the stationary sensor (13) is detachably connected to the housing (9).

3. Mechanical seal according to claim 2, **characterized in that** the stationary sensor (13) is connected to the housing (9) by means of a snap-in connection (23).

4. Mechanical seal according to one of claims 1 to 3, **characterized in that** the mechanical seal (4) projects with its end sealing surface (5) in the axial direction relative to the stationary sensor (13).

5. Mechanical seal according to one of the claims 1 to 4, **characterized in that** the sliding ring (4) is stationary and the mating ring rotates relative to the sliding ring (4).

6. Mechanical seal according to one of claims 1 to 5, **characterized in that** the transducer comprises or is formed by at least one magnet (14) and the stationary sensor (13) is designed as a Hall sensor which detects the position of the magnet (14) in the axial direction.

7. Mechanical seal according to one of claims 1 to 6, **characterized in that** the sliding ring (4) is elastically supported against the housing (9) for its support against the mating ring.

8. Mechanical seal according to claim 7, **characterized in that** the housing (9) surrounds the sliding ring (4) in the circumferential direction and has a housing base (22) which is opposite an end face of the sliding ring (4) facing away from the sealing surface (5), and the sliding ring (4) is elastically supported on the housing base (22) between the end face and the housing base (22) by means of a spring element, in particular by means of a wave spring (8).

9. Mechanical seal according to one of claims 1 to 8, **characterized in that** the sliding ring (4) comprises or is formed by a hollow-cylindrical carbon ring which has an end face forming the sealing face (5) and, in particular, also comprises the end face facing the housing base (22).

10. Mechanical seal according to one of claims 1 to 9, **characterized in that** the housing (9) circumferentially surrounds the sliding ring (4) and has a radially inwardly directed projection (12), and the sliding ring (4) has a stop face (11) opposite the radially inwardly directed projection (12) in the axial direction, with which the sliding ring (4) abuts against the projection (12) during a maximum permissible movement in the axial direction, wherein the transducer, in particular the magnet (14), or an intermediate component (15) carrying the transducer, in particular the magnet (14), is also supported against the stop face (11) or abuts against said face (11).

11. Mechanical seal according to claim 10, **characterized in that** the housing (9) has an opening in the radial direction, through which the intermediate component (15) or the transducer, in particular the magnet (14), projects radially outwards from the housing (9).

## Revendications

1. Garniture d'étanchéité mécanique pour isoler de l'environnement au moins un conduit (1) acheminant un fluide qui passe dans une pièce fixe (2) et/ou une pièce en rotation (3),
avec un anneau glissant (4) et un contre-anneau, l'anneau glissant (4) s'appuyant de façon étanche dans le sens axial contre le contre-anneau et s'appuyant contre le contre-anneau par sa surface d'étanchéité d'extrémité (5) de façon élastique et mobile dans le sens axial, afin de compenser une usure de cette surface d'étanchéité (5) d'extrémité ou d'une surface opposée,
avec un détecteur de position (20) pour détecter la position de l'anneau glissant (4) dans le sens axial,
le détecteur de position (20) possédant au moins un capteur fixé sur l'anneau glissant (4) ou appuyé dans le sens axial contre l'anneau glissant (4) et se déplaçant dans le sens axial avec l'anneau glissant (4) et un capteur fixe (13) positionné à l'extérieur de l'anneau glissant (4) dans le sens radial, qui détecte la position du capteur dans le sens axial,
**caractérisée en ce que** le capteur fixe (13) est connecté à un boîtier (9) qui reçoit l'anneau glissant (4) de façon mobile dans le sens axial et/ou est porté par celui-ci, par rapport auquel l'anneau glissant (4) dépasse dans le sens axial avec sa surface d'étanchéité d'extrémité (5).

2. Garniture d'étanchéité mécanique selon la revendication 1, **caractérisée en ce que** le capteur fixe (13) est connecté au boîtier (9) de façon amovible.

3. Garniture d'étanchéité mécanique selon la revendication 2, **caractérisée en ce que** le capteur fixe (13) est connecté au boîtier (9) au moyen d'un assemblage par enclenchement (23).

4. Garniture d'étanchéité mécanique selon l'une des revendications 1 à 3, **caractérisée en ce que** l'anneau glissant (4) dépasse dans le sens axial par rapport au capteur fixe (13) par sa surface d'étanchéité d'extrémité (5).

5. Garniture d'étanchéité mécanique selon l'une des revendications 1 à 4, **caractérisée en ce que** l'anneau glissant (4) est fixe et le contre-anneau tourne autour de l'anneau glissant (4).

6. Garniture d'étanchéité mécanique selon l'une des revendications 1 à 5, **caractérisée en ce que** le capteur comprend au moins un aimant (14) ou est formé par celui-ci et le capteur fixe (13) est réalisé comme une sonde de Hall, qui détecte la position de l'aimant (14) dans le sens axial.

7. Garniture d'étanchéité mécanique selon l'une des revendications 1 à 6, **caractérisée en ce que** l'anneau glissant (4) s'appuie de façon élastique contre le boîtier (9) pour s'appuyer contre le contre-anneau.

8. Garniture d'étanchéité mécanique selon la revendication 7, **caractérisée en ce que** le boîtier (9) entoure l'anneau glissant (4) dans le sens de la circonférence et présente un fond de boîtier (22) qui fait face à une face d'extrémité de l'anneau glissant (4) opposée à la surface d'étanchéité (5) et l'anneau glissant (4) s'appuie de façon élastique sur le fond de boîtier (22) au moyen d'un élément de ressort, en particulier au moyen d'une rondelle ondulée (8), entre la face d'extrémité et le fond de boîtier (22).

9. Garniture d'étanchéité mécanique selon l'une des revendications 1 à 8, **caractérisée en ce que** l'anneau glissant (4) comprend un anneau en carbone en forme de cylindre creux ou est formé par celui-ci, qui comporte une face d'extrémité formant la surface d'étanchéité (5), et présente en particulier aussi la face d'extrémité tournée vers le fond de boîtier (22).

10. Garniture d'étanchéité mécanique selon l'une des revendications 1 à 9, **caractérisée en ce que** le boîtier (9) entoure l'anneau glissant (4) dans le sens de la circonférence et présente une saillie (12) orientée vers l'intérieur dans le sens radial, et l'anneau glissant (4) présente une surface de butée (11) qui dépasse dans le sens axial en face de la saillie (12) orientée vers l'intérieur dans le sens radial, avec laquelle l'anneau glissant (4) bute sur la saillie (12) lors d'un déplacement maximal autorisé dans le sens axial, le capteur, en particulier l'aimant (14), ou un élément intercalaire (15) qui porte le capteur, en particulier l'aimant (14), s'appuyant également sur la surface de butée (11) ou reposant sur celle-ci.

11. Garniture d'étanchéité mécanique selon la revendication 10, **caractérisée en ce que** le boîtier (9) présente une ouverture dans le sens radial, à travers laquelle l'élément intercalaire (15) ou le capteur, en particulier l'aimant (14), dépasse du boîtier (9) vers l'extérieur dans le sens radial.
